# EUROPÄISCHE PATENTSCHRIFT

(11) **EP 3 003 610 B1**
(45) Veröffentlichungstag und Bekanntmachung des Hinweises auf die Patenterteilung: **11.05.2022**
(21) Anmeldenummer: 14729258.5
(22) Anmeldetag: 30.05.2014
(51) Int. Cl.: B23B 29/12, B23C 5/00, B23C 5/06, B23C 5/16, B23Q 1/00, B23B 37/00

(54) **WERKZEUG, WERKZEUGMASCHINE UND WERKSTÜCKBEARBEITUNGSVERFAHREN**
TOOL, MACHINE TOOL AND METHOD FOR MACHINING WORKPIECES
OUTIL, MACHINE-OUTIL ET PROCÉDÉ D'USINAGE DE PIÈCES

(30) Priorität: 31.05.2013 DE 102013210199
(43) Veröffentlichungstag der Anmeldung: 13.04.2016
(73) Patentinhaber: DMG MORI Ultrasonic Lasertec GmbH, 55758 Stipshausen (DE)
(72) Erfinder: FEUCHT, Florian, 73460 Hüttlingen (DE); KETELAER, Jens, 65205 Wiesbaden (DE)
(74) Vertreter: Beetz & Partner mbB
(86) Internationale Anmeldenummer: PCT/EP2014/061290
(87) Internationale Veröffentlichungsnummer: WO 2014/191566

(56) Entgegenhaltungen:
- WO-A1-2010/091821
- WO-A1-2012/007583
- WO-A1-2014/064009
- WO-A1-2014/111973
- CN-A- 101 020 244
- DE-A1-102008 052 326
- JP-A- H07 299 629
- JP-A- 2010 194 614
- US-A1- 2012 107 062
- PTITSYN G V ET AL: "ultrasonic equipment for machining holes on drilling machines", MACHINES AND TOOLING.(STANKI I INSTRUMENTY), PRODUCTION ENGINEERING RESEARCH ASSOCIATION. MELTON MOWBRAY, GB, Bd. 51, Nr. 4, 1. Januar 1980 (1980-01-01) , Seiten 39-40, XP002207433,

## Beschreibung

Es ist bekannt, Werkstücke mit Werkzeugen mit definierter Schneide spanabhebend zu bearbeiten. Die bekanntesten Verfahren sind hierbei das Bohren, das Drehen, das Fräsen und das Hobeln. Die zugehörigen Werkzeuge haben eine oder einige deutlich definierte, klar beschreibbare Schneidkanten. Durch eine Relativbewegung zwischen Werkzeug, insbesondere Schneidkante desselben, und Werkstück (Schneidbewegung) wird die spanabhebende Bearbeitung bewirkt. Sie erfolgt mit einer gewissen Abtragsleistung unter einem gewissen Werkzeugverschleiß und hinterlässt Oberflächen mit in gewissen Grenzen vorhersehbaren Eigenschaften. Beim Bohren wird in der Regel das Werkzeug bewegt, beim Drehen das Werkstück. Beim Fräsen dreht sich in der Regel das Fräswerkzeug, während es oder das Werkstück selbst verfahren wird. Beim Hobeln können das Werkzeug oder das Werkstück verfahren werden. Das Werkstück kann seinerseits ein Werkzeug sein, das mit dem beschriebenen Werkzeug gefertigt wird.

Es ist weiterhin bekannt, Werkstücke mittels vibrierender Werkzeuge ohne definierte Schneide zu bearbeiten. Die vibrierenden Werkzeuge sind rau, arbeiten schleifend und vibrieren vergleichsweise hochfrequent (Vibrationsbewegung), beispielsweise mit Frequenzen über 5 kHz oder über 10 kHz oder über 20 kHz. Wegen der hohen Vibrationsfrequenzen, die jenseits des menschlichen Gehörs liegen können, werden die Bearbeitung häufig als Ultraschallbearbeitung und die Maschine als Ultraschallmaschine bezeichnet. Die Vibration des Werkzeugs kann eine translatorische oder eine rotatorische Vibration sein. Das Werkzeug kann flächenparallel am Werkstück entlangfahren und dann quasi feilend Material abtragen. Es kann aber auch stoßend auf das Werkstück einwirken.

Die WO 2012/007583 A1 offenbart ein Werkzeug gemäß dem Oberbegriff des unabhängiges Anspruchs 1 mit definierter Schneide, deren Drehbewegung eine rotatorische Vibration überlagert ist.

Die JP 07299629 beschreibt eine Vorrichtung zur Herstellung von Nuten, bei der am einen Ende einer drehbaren Welle ein Vibrationsantrieb und am anderen Ende ein Resonanzhorn sitzen.

Ein Nachteil bekannter Werkzeuge ist es, dass Werkzeuge großen Durchmessers aufgrund ihrer Größe und Schwere als nicht hinreichend im Vibrationsbetrieb verwendbar angesehen werden oder bei starkem Vibrationsantrieb starke Rückwirkungen auf die Maschine aufweisen.

Die Aufgabe der Erfindung ist es, ein Werkzeug relaltiv großen Durchmessers sowie eine ein solches Werkzeug verwendende Maschine anzugeben, bei denen geringen Rückwirkungen des Vibrationsantriebs auf die Maschine im Vibrationsbetrieb vorliegen.

Diese Aufgabe wird durch ein Werkzeug mit den Merkmalen des unabhängigen Anspruchs 1 sowie durch die Verwendung dieses Werkzeugs gemäß dem unabhängigen Anspruchs 11 gelöst. Abhängige Patentansprüche sind auf bevorzugte Ausführungsformen der Erfindung gerichtet.

Das erfindungsgemäße Werkzeug hat einen maschinenseitigen Maschinenanschluss (z. B. HSK, Steilkegel) zum Verbinden des Werkzeugs mit einer Werkzeugmaschine, einen werkstückseitigen Werkzeugkopf mit einer oder mehreren definierten Schneiden zum Bearbeiten eines Werkstücks, wobei der Durchmesser des Werkzeugkopfs größer 20 mm ist und wobei die Schneiden des Werkzeugs so angeordnet sein können, dass sie im Betrieb eine Fläche senkrecht zur Drehachse deckend überfahren, eine Vibrationseinheit, die dazu ausgelegt ist, den Werkzeugkopf in eine Rotationsvibration um die Drehachse zu versetzen und eine Energieempfangseinrichtung zum Empfangen drahtlos zugeführter Energie und Zuführen elektrischer Energie zur Vibrationseinheit. Das Werkzeug weist ein längliches, rohrartiges und sich längs der Drehachse erstreckendes Vibrationsteil auf, das am Antriebsende die Vibrationseinheit, am Abtriebsende den Werkzeugkopf, und zwischen den beiden Enden einen Zwischenbereich aufweist, der mit dem Maschinenanschluss verbunden ist.

Die Drehvibration weist durchmesserabhängige Amplituden auf. Bei großen Durchmessern ist der Nachteil kleiner Amplituden durch die geometrische Übersetzung am großen Umfang ansatzweise ausgeglichen. Durch Ausnützung von Resonanzeffekten in bestimmter Weise kann die Amplitude weiter vergrößert werden.

Die Energieempfangseinrichtung kann eine Induktionsspule aufweisen, die direkt oder indirekt mit einem oder mehreren Vibrationsantrieben (z. B. PiezoElemente) in der Vibrationseinheit verbunden ist. Sie kann ringförmig und konzentrisch zur Drehachse angeordnet und zum Zusammenwirken mit einer ihr in Richtung der Drehachse gegenüber liegenden stationären Spule ausgelegt sein.

Die Vorschubrichtung des Werkzeug kann senkrecht (Planfräser) oder parallel (Bohrer) zur Drehachse liegen. Der mit dem Werkstück in Eingriff stehende Teil des Werkzeugkopfs kann einen Durchmesser von über 25 mm oder über 30 mm und/oder einen Durchmesser von unter 150 mm oder unter 100 mm oder unter 80 mm haben.

Das Werkzeug kann so dimensioniert sein und betrieben wird, dass die Vibrationsfrequenz eine Torsionsresonanzfrequenz des Vibrationsteils oder ein Mahrfaches davon ist, wobei das Antriebsende und/oder das Abtriebsende in einem Bereich von ±20% oder ±10% oder ±5% der Resonanzwellenlänge um einen Schwingungsbauch herum liegen und/oder der Zwischenbereich und insbesondere dessen Befestigungsbereich zur Verbindung hin in einem Bereich von ±20% oder ±10% oder ±5% der Resonanzwellenlänge um einen Schwingungsknoten herum liegt.

Eine Werkzeugmaschine hat einen Maschinenrahmen, einen daran angebrachten Werkstücktisch zum Halten eines Werkstücks, eine am Maschinenrahmen angebrachten Werkzeugspindel mit einem Werkzeug wie oben beschrieben, einer Energiesendeeinrichtung zum drahtlosen Sende von Energie zur Energieempfangseinrichtung des Werkzeugs, und eine Steuerung, die zum Betreiben der mit dem Werkzeug ausgestatteten Maschine, insbesondere der Spindel und der Energiesendeeinrichtung ausgelegt ist.

Nachfolgend werden Ausführungsformen der Erfindung Bezug nehmend auf die Zeichnungen beschrieben, es zeigen
Fig. 1 schematisch die Ansicht einer Werkzeugmaschine,
Fig. 2 schematisch ein Werkzeug,
Fig. 3 schematisch ein Werkzeug,
Fig. 4 Erläuterungen zum Schwingungsverhalten,
Fig. 5 den Schwingungsantrieb in einer Ausführungsform, und
Fig. 6 weitere Ausführungsformen des Werkzeugs.

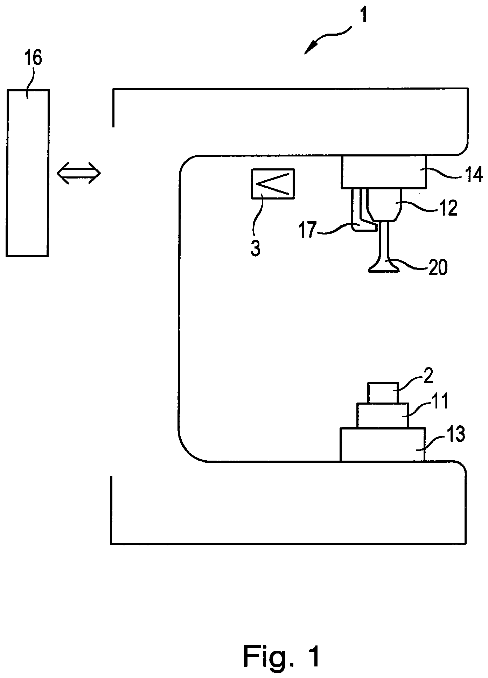

Figur 1 zeigt schematisch eine Werkzeugmaschi ne 1. Sie weist einen Maschinenrahmen 10 auf. Im Betrieb sind über verschiedene Zwischenglieder am Maschinenrahmen 10 einerseits das Werkstück 2 und andererseits das Werkzeug 20 befestigt. Es können mehrere Stellachsen 13, 14 zur statischen Einstellung der translatorischen und/oder rotatorischen Positionen des Werkzeugs 20 und/oder des Werkstücks 2 vorgesehen sein. Weiterhin ist eine Spindel 12 für das Werkzeug 20 vorgesehen, um es in Drehbewegung zu versetzen. Es können Stellachsen 13 zwischen Maschinenrahmen 10 und Werkzeugtisch 11 vorgesehen sein und/oder Stellachsen 14 zwischen Maschinenrahmen 10 und Werkzeug 20 bzw. Spindel 12 Eine oder mehrere der Stellachsen 13 können im Betrieb auch translatorische oder rotatorische Vorschubbewegungen des Werkzeugs 20 relativ gegenüber dem Werkstück 2 ausführen.

Die Werkzeugmaschine 10 kann allgemein Sensorik 3 zur Erfassung von Prozessparametern aufweisen. Die Sensorik kann einen oder mehrere Sensoren verteilt über die Werkzeugmaschine aufweisen. Über Leitungen werden die Signale zur Steuerung/Regelung 16 zurückgeführt und dort protokolliert und/oder ausgegeben und/oder ihrerseits zur Ansteuerung der diversen Maschinenkomponenten (Achsen 13, 14, Spindelantrieb 12, Energieversorgung 17). Daneben kann eine nicht gezeigte Ausgabeeinheit für Bedienpersonal vorhanden sein.

Das Werkzeug 20 kann eine Fräse, insbesondere ein Planfräser sein, der bei der Werkstückbearbeitung elektrisch angetrieben in Drehbewegung versetzt wird. Es kann sich aber auch um einen Bohrer handeln.

Das Werkzeug 2 kann über eine genormte Kupplung 21 austauschbar sein, so dass es schnell und gegebenenfalls auch automatisch gewechselt werden kann. Die Kupplung 21 kann eine übliche Kegelkupplung (Steilkegel, HSK) mit korrespondierenden werkzeugseitigen und spindelseitigen Aufnahmen sein.

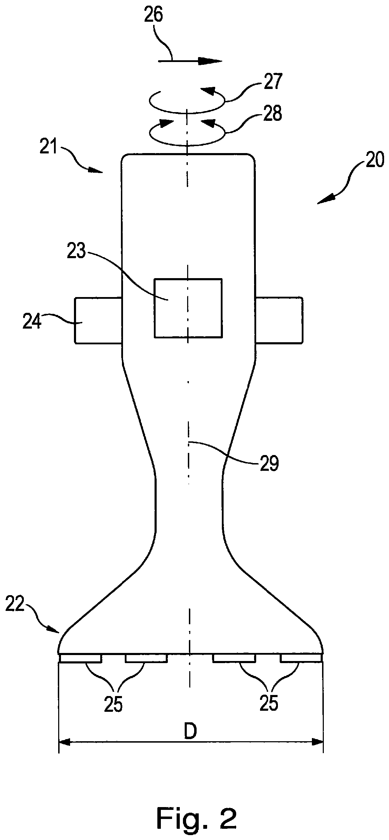

Die in Fig. 1 schematisch gezeigte Werkzeugmaschine ist zum Betrieb mit einem Werkzeug, wie es in Fig. 2, 3 oder 6 schematisch gezeigt ist, ausgelegt Insbesondere ist die Steuerung 16 so ausgelegt, dass der Betrieb des Werkzeugs geeignet erfolgt. Neben den herkömmlichen Funktionen wie Ansteuern der Stellachsen 13, 14, Ansteuern der Spindel 12 kann dies auch das geeignete Ansteuern der Energiesendeeinrichtung 17 mit geeigneten Signalen insbesondere geeigneter Amplitude und/oder geeigneter Frequenz und/oder geeigneten Timings umfassen. Amplitude und Frequenz können werkzeugabhängig in der Steuerung 16 hinterlegt sein oder als Teil eines Steuerungsprogramms gespeichert sein

Fig. 2 zeigt schematisch in Seitenansicht ein Werkzeug 20. Schematisch angedeutet sind die Drehachse 29, die von der Spindel 12 bewirkte Drehbewegung 27 des Werkzeugs, die von den Stellachsen 13 und/oder 14 bewirkte Vorschubbewegung 26 des Werkzeugs 20 relativ zum Werkstück 2 und die von Vibrationsantrieb 23 hervorgerufene Rotationsvibration 28 (Torsionsvibration).

21 symbolisiert schematisch den Anschluss des Werkzeugs an die Maschine 1. Der Maschinenanschluss 21 kann normiert ausgestaltet sein. Es kann ein HSK-Anschluss passenden Durchmessers sein oder ein Steilkegelanschluss oder ähnliches. Die Fig. 2 zeigt den Maschinenanschluss 21 nur schematisch

22 bezeichnet den Werkzeugkopf, der die Schneiden hin zum Werkstück 2 hinträgt. Die Schneiden sind definierte Schneiden 25, die fest im Werkzeugkopf 22 eingeformt sein können oder die durch austauschbare Schneideinsätze, etwa anschraubbare Schneideinsätze oder Wendeschneidplatten, angebaut werden können. Mit D ist der Durchmesser des Werkzeugs beschrieben, wobei hier der wirksame Durchmesser am Werkstück gemeint ist, also letztlich das Maß über die radial äußersten Bereiche der Schneidkanten 25 bzw. Schneideinsätze dazu. Der Durchmesser D ist vergleichsweise groß und liegt über 20 mm, vorzugsweise über 25 mm oder über 30 mm.

Zumindest in radial außen liegenden Bereichen des Werkzeugkopfs weist eine Torsionsvibration wegen des vergleichsweise großen Radius eine akzeptable Amplitude auf. Die Tatsache, dass ein großes Werkzeug in seiner Schwere nur schwer zu Vibrationen befriedigender Amplitude anregbar ist, wird bei der Anregung mit Torsionsvibrationen dadurch ansatzweise ausgeglichen, dass die Amplitude mit steigendem Abstand von der Achse 29 der Torsionsvibration größer wird. Der Durchmesser D kann unter 150 mm oder unter 100 mm liegen.

Das Werkzeug 20 kann in der Weise tailliert sein, dass der Maschinenanschluss 21 und gegebenenfalls auch der Werkzeugkopf 22 einen größeren Durchmesser haben als dazwischenliegende Bereiche. Die Schneiden 25 decken in Summen bei drehbewegung um die Achse 29 vorzugsweise die Stirnfläche (Fläche senkrecht zur Drehachse 29) des Werkzeugs ab. Sie können, wie in Fig. 2 schematisch angedeutet, in einer planen Fläche liegen.

Die muss aber nicht sein. In anderen Ausführungsformen können sie (längs der Drehachse 29 betrachtet) Teile des Umfangs überstreichend ausgebildet sein.

23 ist eine Vibrationseinheit, die dazu ausgelegt ist, den Werkzeugkopf in Rotationsvibrationen (angedeutet durch Pfeil 28 zu Versetzen. Sie kann Piezoelemente aufweisen. Sie werden elektrisch mit Wechselsignalen beaufschlagt. Die Vibrationsfrequenz kann dabei unmittelbar der Frequenz des elektrischen Wechselsignals entsprechen.

24 bezeichnet eine Energieempfangseinrichtung. Es kann sich um eine ringförmige Induktionsspule handeln, die von einem gezielt erzeugten magnetischen Wechselfeld durchsetzt wird, an ihren Enden eine induzierte Spannung erzeugt und so die für den Betrieb der Vibrationseinheit 23 benötigte elektrische Energie liefert. Je nach Auslegung kann die Spule der Energieempfangseinrichtung 24 direkt mit den Piezoelementen der Vibrationseinheit 23 verbunden sein. Es können dazwischen aber auch Schaltungselemente zur Versorgungsformung für die Piezoelemente liegen (Gleichrichtung, Wechselrichtung, Amplitudensteuerung,...) .

Fig. 2 ist nicht so zu verstehen, dass das Werkzeug einen einstückigen Grundkörper aufweist. Das Werkzeug kann insgesamt mehrstückig, etwa in axialer Richtung unterteilt aufgebaut sein. Die Einzelteile sind dann geeignet miteinander verbunden, etwa durch Verschrauben, Verlöten, Verschweissen, Verpressen oder ähnliches

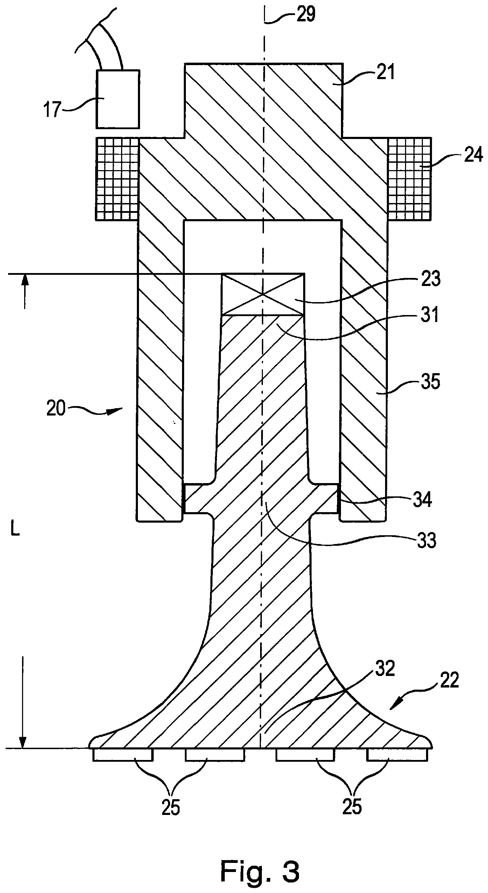

Fig. 3 zeigt eine Ausführungsform des Werkzeugs im Schnitt, bei dem das Werkzeug ein Vibrationsteil 31-34 aufweist, der über ein Verbindungsteil 35 mit dem Maschinenanschluss verbunden ist. Das Vibrations teil hat eine gewisse Länge L, die sich im Wesentlichen parallel zur Drehachse 29 erstreck. Das Vibrationsteil hat ein Antriebsende 31, ein Abtriebsende 32 und dazwischen einen Zwischenbereich 33, 34. Am Antriebsende 31 liegt der Vibrationsantrieb 23. Am Abtriebsende 32 liegt der Werkzeugkopf 22 und insbesondere die Schneidkanten 25 bzw. die Schneideinsätze. Zwischen Antriebsende 31 und Abtriebsende 32 liegt der Zwischenbereich 33, 34. Er weist einen Befestigungsbe reich 34 auf, mit dem das Vibrationsteil 31-34 mit dem Maschinenanschluss 21 verbunden ist. Die Verbindung ist fest und so stabil, dass die während des Einsatzes des Werkzeugs entstehenden Kräfte sicher übertragen werden können.

Das Verbindungsteil 35 zwischen Befestigungsbereich 34 und Maschinenanschluss 21 ist eine rohrartige oder zylinderartige Struktur 35, die das Antriebsende 31 und den Vibrationsantrieb 23 umgibt und sich dann in axialer Richtung vom Maschinenanschluss 21 hin zum Verbindungsbereich 34 erstreckt. Das Verbindungsteil 35 kann vollzylindrisch ausgelegt sein, also über den Umfang geschlossen sein, oder es kann Durchbrüche aufweisen oder auch nur einzelne Streben zur Verbindung des Verbindungsbereichs 34 des Vibrationsteils 31-34 mit dem Maschinenanschluss 21 aufweisen.

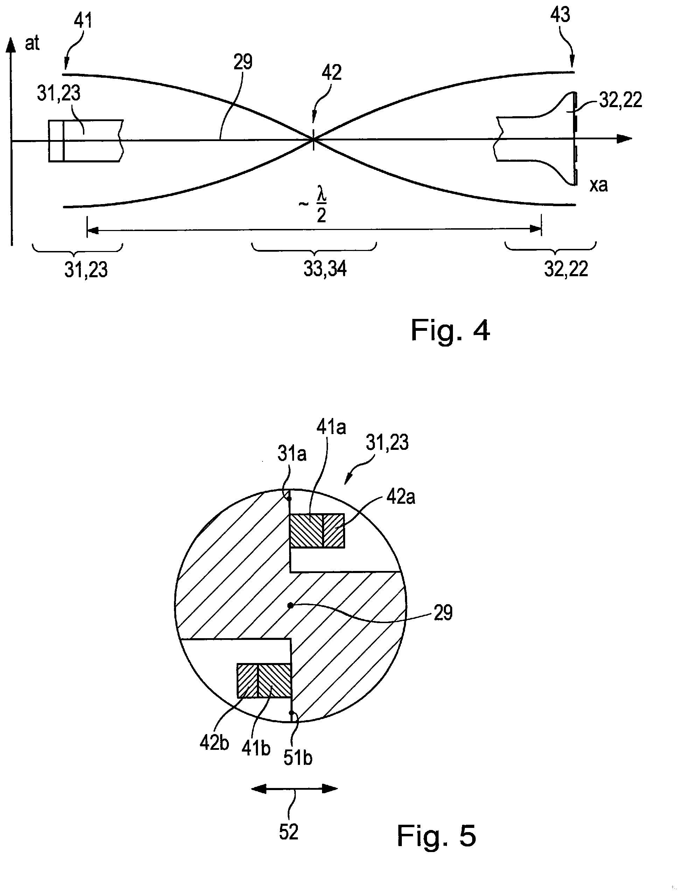

Fig. 4 zeigt schematisch einen Betriebsmodus des in Fig. 3 gezeigten Werkzeugs. Sie zeigt ein Diagramm, das als Abszisse die axiale Position xa längs der Drehachse 29 und als Ordinate die Amplitude der Torsionsvibration um die Achse 29 herum zeigt. Schematisch hineingezeichnet in das Diagramm sind einzelne Bereiche des Vibrationsteil 31-34.

Die Auslegung und der Betrieb können so sein, dass sich längs des Vibrationsteils ein Schwingungsknoten 42 mit geringerer Amplitude der Torsionsvibration (näherungsweise 0) einstellt. Im Bereich dieses Knotens 42 (minimale Amplitude der Torsionsvibration) kann der Zwischenbereich 33 und insbesondere der Befestigungsbereich 34 des Vibrationsteils 31-34 liegen.

Indem der Zwischenbereich 33 und insbesondere der Befestigungsbereich 34 im Bereich eines Schwingungsknotens 42 positioniert wird, erhält man den Vorteil, dass Rückwirkungen des vibrierenden Systems auf die Maschine minimiert werden. Das Vibrationsteil wird dort gehalten, wo seine Vibrationen minimal sind. Dann sind auch Vibrationen, die sich über den Maschinenanschluss 21 zur Maschine 1 hin fortpflanzen minimiert, sodass keine nachteiligen Wechselwirkungen in der Maschine befürchtet werden müssen.

Über die axiale Länge betrachtet weist die Torsi onsvibration eine durch die Knoten und Bäuche der Torsionsvibrationsamplitude definierte Wellenlänge λ auf. Fig. 4 zeigt eine Ausführungsform, bei der die Länge L des Vibrationsteils 31-34 des Werkzeugs in etwa die halbe Wellenlänge λ, also λ/2 der Torsionsvibration ist. Links und rechts des Knotens 42 befinden sich Schwingungsbäuche 41 und 43, die gegenphasig schwingen. Die beiden gegenläufigen, sich im Knoten 42 schneidenden Kurven können ähnlich einer Hüllkurve verstanden werden, wobei zu beachten ist, dass Torsionsschwingungen beschrieben sind.

Im Bereich des Bauchs 41 kann das Antriebsende 31 des Vibrationsteils 31-34 und insbesondere der Vibrationsantrieb 23 liegen. Im Bereich des anderen Bauchs 43 kann der Werkzeugkopf 22 und insbesondere das Abtriebsende 32 des Vibrationsteils 31-34 zusammen mit den Schneidkanten 25 bzw. den Schneideinsätzen liegen

Fig. 4 deutet eine symmetrische Verteilung der Bäuche bezüglich des Knotens 42 an. Dies kann sein, muss aber nicht sein. Es hängt von der konkreten mechanischen Gestaltung des Werkzeugs ab, wo sich Vibrationsknoten und Vibrationsbäuche befinden. Anders ausgedrückt muss die Wellenlänge λ nicht zwingend konstant über die Länge des Vibrationsteils sein, sondern kann sich ändern, abhängig von sich längs der axialen Länge ändernden Eigenschaften des Vibrationsteils, etwa Masse pro Länge, lokale Steifigkeit und ähnliches. Die jeweiligen Verhältnisse sind errechenbar oder numerisch simulierbar oder gegebenenfalls auch empirisch ermittelbar. Die Gestaltung kann dementsprechend auch so sein, dass einer der Bäuche deutlich näher am Knoten liegt als der andere.

Fig. 4 zeigt Verhältnisse bei der Grundschwingung.

Es ist aber auch denkbar, das Werkzeug 20 bei höheren Moden (Oberschwingungen, andere Resonanzen, ...) zu betreiben. Es können auch zwei oder mehr Knoten 42 längs der Abszisse 29 zwischen Antriebsende 31 und Abtriebsende 32 vorliegen. Sinnvoll ist es aber häufig, mindestens den Werkzeugkopf 22 und vorzugsweise auch den Vibrationsantrieb 23 im Bereich von Schwingungsbäuchen zu positionieren, also jeweils um etwa λ/4 vom Knoten beabstandet, um die Amplitude der Torsionsvibration zu optimieren.

Die Angabe der Positionierung von Antriebsende 31 und/oder Abtriebsende 32 oder Zwischenbereich 33, 34 bzw. Befestigungsbereich 34 relativ zu Schwingungsknoten bzw. Schwingungsbäuchen kann toleranzbehaftet mit maximal ± 20 % oder ± 10 % oder ± 5 % der Resonanzwellenlänge λ, betrachtet jeweils am lokal relevanten Knoten oder Bauch, verstanden werden

Da Kleinheit der Bauweise auch immer wieder gewünscht ist, kann die Länge des Vibrationsteils L etwa 0.4λ < L < 0,5λ sein. Antrieb und Abtrieb können dann immer noch nahe an Bäuchen und damit im Bereich hinreichend großer Amplituden liegen, so dass man mehr Baugröße verliert als Vibrationsamplitude.

Soweit Resonanzen betrachtet werden, können sie als im Leerlauf (Werkzeug nicht im Eingriff mit Werkstück) oder unter Last (mit erwarteter Kraftbeaufschlagung am Werkzeugkopf) entstehend definiert sein und betrachtet werden.

Einerseits Vibrationsfrequenz und andererseits mechanische Gestaltung des Werkzeugs bedingen sich gegenseitig und sind aufeinander abgestimmt, wenn Resonanzeffekte gezielt genützt werden sollen. Die Steuerung der Maschine ist dazu ausgelegt, dem Werkstück über die Energiesendeeinrichtung 17 die geeignete Frequenz(en) zuzuführen. Die Auslegung kann aber auch so sein, dass die Maschine ein irgendwie/beliebig geartetes magnetisches Wechselfeld erzeugt, um induktive Effekte in der Energieempfangseinrichtung 24 des Werkzeugs zu erreichen. Die eigentliche Spannungsformung für den Betrieb der Piezoaktoren 23, 41 hinsichtlich Frequenz und Amplitude wird dann im Werkzeug 20 selbst mit einer dort untergebrachten geeigneten Schaltung vorgenommen.

Schematisch gezeigt ist in Fig. 3 nochmals die Energieempfangseinrichtung 24. Sie kann ringförmig ausgebildet sein und das Werkzeug vollständig umfangen. Schematisch angedeutet ist auch die maschinensei tige Energiesendeeinrichtung 17. Sie kann in Richtung der Rotationsachse 29 von der Energieempfangseinrichtung 24 durch einen dünnen Spalt beabstandet sein. Sie kann ringsegmentförmig ausgebildet sein und der Spule der Energieempfangseinrichtung 24 nur über einen gewissen Bereich des Umfangs des Rings gegenüberliegen und einen anderen Bereich freilassen, so dass ein Werkzeugwechsler noch angreifen kann. Die Energiesendeeinrichtung 17 erzeugt ein magnetisches Wechselfeld, das die Spule der Energieempfangseinrichtung 24 durchsetzt und dort zu induzierter Spannung führt. Die Energiesendeeinrichtung 17 ist bezüglich der Maschine ortsfest angebracht.

Fig. 5 zeigt schematisch in Draufsicht auf einen Schnitt senkrecht zur Vibrationsachse 29 durch das Antriebsende 31 des Vibrationsteils eine mögliche Gestaltung des Vibrationsantriebs 23 am Antriebsende 31 41a und 41b sind exzentrisch zur Drehachse 29 angebrachte Vibrationsantriebe, wobei es sich hier um Piezoelemente handeln kann. Ihre Vibrationsachse ist senkrecht zur Anlagefläche 51 entsprechend dem gezeig ten Pfeil 52. Ihr je eines Ende ist an Anlageflächen angebracht und kann dort mittels Schraubverbindungen vorgespannt sein.

Das andere Ende der Piezoelemente 41 (das nicht an der Anlagefläche 51 anliegt) kann frei ausschwingen oder kann an einem Gegenmassenelement 42a, 42b anliegen. Diese kann je nach Bedarf größer oder kleiner ausgelegt sein. Gezeigt sind einzelne Gegenmassenel mente 42a, 42b. Sie können aber auch axial nach hinten (weg vom Werkstück, hin zur Maschine) miteinander verbunden sein und nochmals eine schwere starre Struktur aufweisen. Die Gegenmassenelmente 42a, 42b bilden ein schwimmendes Widerlager, das aufgrund seiner Trägheit gerade bei hohen Frequenzen hinreichend wirksam wird.

Die Fig. 5 zeigt zwei Piezoelemente 41a, 41b. Es können aber auch mehrere (3, 4, 5, 6 oder mehr) Piezoelemente sein. Nicht gezeigt sind die elektrischen Leitungen zur Zuführung elektrischer Energie von der Energieempfangseinrichtung 24 her.

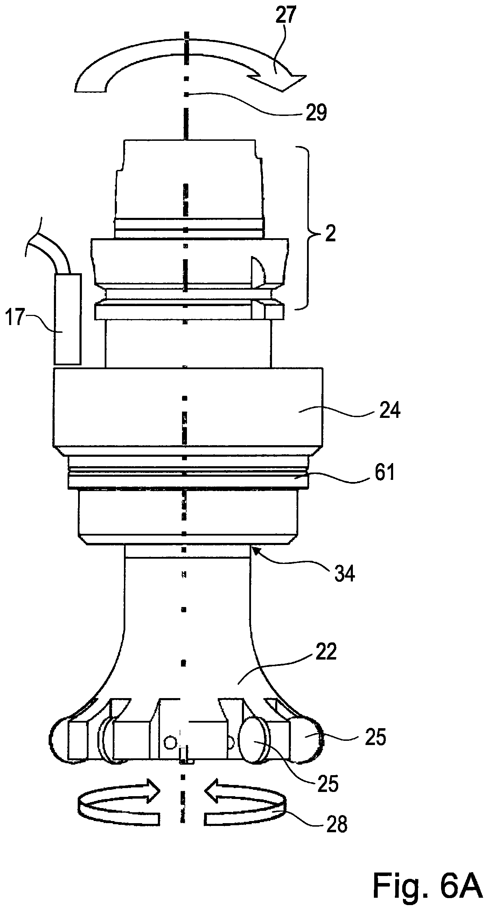

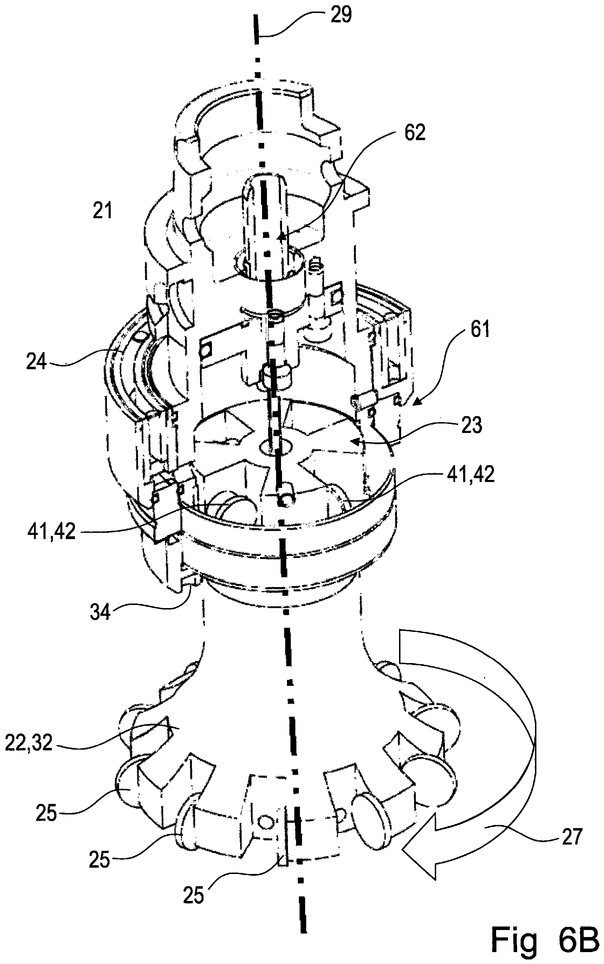

Fig. 6 zeigt konkretere Ausführungsformen des Werkzeugs, Fig. 6A in Seitenansicht und Fig. 6B perspektivisch im Teilschnitt. 21 zeigt eine HSK-Kupplung. 24 ist die Energieempfangseinrichtung, die als Induktionsspule ausgelegt ist und der eine entsprechende Energiesendeeinrichtung 17, die stationär an der Maschine befestigt ist, axial beabstandet gegenüberliegt. Der Werkzeugkopf 22 ist in der Weise gezeigt, dass er mit mehreren Schneideinsätzen 25 bestückt ist. Sie können an geeigneten Befestigungsbe reichen befestigt werden. Der Werkzeugkopf ist nach unten pilzförmig ausgebildet, indem nach unten sein Durchmesser zunimmt. 61 symbolisiert einen Wuchtring, bei dem zur Auswuchtung des Werkzeugs gezielt Material entfernt werden kann.

Die Ausführungsform der Figuren 6 deutet an, dass die Lage des Befestigungsbereichs 34 nicht symmetrisch zwischen Antriebsende 31 und Abtriebsende 32 liegt, sondern näher am Antriebsende. Wie schon gesagt hängt dies von den Dimensionierungen und Gestaltungen der einzelnen Bereiche des Vibrationsteils ab

Fig. 6B deutet eine Ausführungsform an, bei der der Vibrationsantrieb 23 vier über den Umfang verteilte Piezoelemente entsprechend den vier Fächern im Antriebsteil des Vibrationsteils aufweist. 62 symbolisiert eine Fluidführung, die Kühlmittel oder Schmiermittel zuführen kann.

In der gezeigten Ausführungsform kann die Spule der Energieempfangseinrichtung 24 den größten Durchmesser aufweisen. Es kann aber auch der Werkzeugkopf 22 zusammen mit den Schneiden 25 den größten Durchmesser bilden. Wie schon gesagt, kann die Ausführungsform tailliert in der Weise sein, dass der Durchmesser zwischen Werkzeugkopf und Maschinenanschluss geringerer wird

Der Durchmesser des Werkzeugkopfs (wirksamer Durchmesser am Werkstück) liegt über 20 mm und kann über 25 oder über 30 mm liegen Er kann unter 150 mm oder unter 100 mm liegen.

Die Drehzahl des Werkzeugs kann über 500 UpM oder über 1000 UpM oder über 2000 UpM liegen. Sie kann unter 30 000 UpM oder unter 24 000 UpM oder unter 20 000 UpM liegen.

Die Vibrationsfrequenz der Torsionsvibration kann über 5 khz oder über 10 khz oder über 15 khz oder über 20 kHz liegen. Sie kann unter 100 khz oder unter 80 khz oder unter 60 khz liegen.

## Patentansprüche

1. Werkzeug (20) mit
einem maschinenseitigen Maschinenanschluss (21) zum Verbinden des Werkzeugs mit einer Werkzeugmaschine (1) für den Drehantrieb (27) des Werkzeugs um eine Drehachse (29) und den Vorschub (26) des Werkzeugs relativ zu einem Werkstück,
einem werkstückseitigen Werkzeugkopf (22) mit einer oder mehreren Schneiden zum Bearbeiten eines Werkstücks, wobei der Durchmesser des Werkzeugkopfs größer als 20 mm ist und wobei die Schneiden des Werkzeugs so angeordnet sind, dass sie eine Fläche senkrecht zur Drehachse überfahren können,
einer Vibrationseinheit (23), die dazu ausgelegt ist, den Werkzeugkopf in eine Rotationsvibration (28) um die Drehachse zu versetzen, und
einer Energieempfangseinrichtung (24) zum Empfangen drahtlos zugeführter Energie und Zuführen elektrischer Energie zur Vibrationseinheit, **dadurch gekennzeichnet, dass** das Werkzeug (20) ein längliches und sich längs der Drehachse (29) erstreckendes Vibrationsteil (31-34)aufweist, das am Antriebsende (31) die Vibrationseinheit (23), am Abtriebsende (32) den Werkzeugkopf (22) und zwischen den beiden Enden einen Zwischenbereich (33, 34) aufweist,
wobei der Zwischenbereich (33, 34) mechanisch fest mit dem Maschinenanschluss (21) verbunden ist,
wobei die Verbindung von Zwischenbereich und Maschinenanschluss eine rohrartige Struktur (35) aufweist,
(i) die das Antriebsende (31) umgibt,
(ii) deren eines Ende am Zwischenbereich (33, 34) befestigt ist, und
(iii) deren anderes Ende mit dem Maschinenanschluss (21) verbunden ist.

2. Werkzeug nach Anspruch 1, **dadurch gekennzeichnet, dass** die Energieempfangseinrichtung (24) eine von einem magnetischen Feld durchsetzbare Spule aufweist, die direkt oder indirekt mit einem oder mehreren Vibrationsantrieben (23) in der Vibrationseinheit verbunden ist.

3. Werkzeug nach Anspruch 2, **dadurch gekennzeichnet, dass** die Spule ringförmig und konzentrisch zur Drehachse (29) angeordnet ist und zum Zusammenwirken mit einer ihr in Richtung der Drehachse gegenüber liegenden stationären Spule ausgelegt ist.

4. Werkzeug nach einem der vorherigen Ansprüche, dessen Vorschubrichtung (26) senkrecht zur Drehachse (29) liegt.

5. Werkzeug nach einem der vorherigen Ansprüche, wobei der mit dem Werkstück in Eingriff stehende Teil des Werkzeugkopfs einen Durchmesser von über 25 mm und/oder einen Durchmesser von unter 150 mm, bevorzugt unter 100 mm, besonders bevorzugt unter 80 mm aufweist.

6. Werkzeug nach einem oder mehreren der vorherigen Ansprüche, wobei die Vibrationseinheit (23) ein oder mehrere Piezoelemente (41) aufweist.

7. Werkzeug nach Anspruch 1, wobei das Antriebsende eine oder mehrere exzentrisch zur Drehachse angebrachte translatorisch vibrierende Vibrationsantriebe (41, 42) aufweist, deren Vibrationsachse in Umfangsrichtung bezüglich der Drehachse (29) gerichtet ist.

8. Werkzeug nach Anspruch 6 und 7, wobei das eine Ende eines Piezoelements (41) mit einer Anlagefläche am Antriebsende (31) verbunden ist und das andere Ende frei oder mit einer Gegenmassenelement (42) verbunden ist.

9. Werkzeug nach einem der vorherigen Ansprüche, **dadurch gekennzeichnet, dass** es am Werkzeugkopf (22) einen oder mehrere separat anbringbare Schneideinsätze (25) aufweist.

10. Werkzeug nach einem der vorherigen Ansprüche, **dadurch gekennzeichnet, dass** der Maschinenanschluss (21) ein normiertes Anschlussstück aufweist, insbesondere einen Steilkegel oder einen HSK-Anschluss.

11. Verwendung des Werkzeugs nach Anspruch 1, 7, 8, 9 oder 10, (i) bei einer Vibrationsfrequenz, die eine Torsionsresonanzfrequenz des Vibrationsteils (31 - 34) oder ein Mehrfaches davon ist,
(ii) bei der das Antriebsende und/oder das Abtriebsende in einem Bereich von ±20%, bevorzugt ±10%, besonders bevorzugt ±5% der Resonanzwellenlänge um einen Schwingungsbauch (42) herum liegt.

12. Verwendung nach Anspruch 11 oder Verwendung eines Werkzeugs nach einem der Ansprüche 1, 7, 8, 9 oder 10, (i) bei einer Vibrationsfrequenz, die eine Torsionsresonanzfrequenz des Vibrationsteils oder ein Mehrfaches davon ist,
(ii) bei der der Zwischenbereich und insbesondere dessen Befestigungsbereich zur Verbindung hin in einem Bereich von ±20%, bevorzugt ±10%, besonders bevorzugt ±5% der Resonanzwellenlänge um einen Schwingungsknoten (41, 43) herum liegt.

13. Verwendung nach Anspruch 11 oder 12, bei dem die Vibrationsamplitude in Umfangsrichtung am Außenumfang des Werkzeugs über 0,5 µm, bevorzugt über 1 µm, besonders bevorzugt über 2 µm liegt.

14. Verwendung nach einem der Ansprüche 11 bis 13, bei dem die Vibrationsfrequenz über 5 kHz, bevorzugt über 10 kHz, besonders bevorzugt über 15 kHz oder unter 100 kHz oder unter 80 kHz oder unter 60 kHz liegt.

15. Verwendung nach einem der Ansprüche 11 bis 14, **dadurch gekennzeichnet, dass** die Drehzahl des Werkzeugs über 500 UpM, besonders bevorzugt über 1000 UpM, besonders bevorzugt über 2000 UpM oder unter 30000 UpM, bevorzugt unter 24000 UpM, besonders bevorzugt unter 20000 UpM liegt.

16. Werkzeugmaschine (1) mit einem Maschinenrahmen (10), einem daran angebrachten Werkstücktisch (11) zum Halten eines Werkstücks (2), einem am Maschinenrahmen angebrachten Werkzeugspindel (12), einem Werkzeug (20) nach einem oder mehreren der Ansprüche 1 bis 10, einer Energiesendeeinrichtung (17) zum drahtlosen Sende von Energie zur Energieempfangseinrichtung (24) des Werkzeugs, und einer Steuerung (16), die zum Betreiben der mit dem Werkzeug ausgestatteten Maschine, insbesondere der Spindel und der Energiesendeeinrichtung ausgelegt ist.

## Claims

1. A tool (20) comprising
a machine-side machine connection (21) for connecting the tool to a machine tool (1) for rotational drive (27) of the tool about a rotational axis (29) and feed (26) of the tool relative to a workpiece,
a workpiece-side tool head (22) having one or more cutting edges for machining a workpiece, wherein the diameter of the tool head is greater than 20 mm, and wherein the cutting edges of the tool are arranged to sweep over a surface perpendicular to the axis of rotation,
a vibration unit (23) adapted to cause the tool head to rotationally vibrate (28) about the axis of rotation, and
energy receiving means (24) for receiving wirelessly supplied energy and supplying electrical energy to the vibration unit,
**characterized in that** the tool (20) comprises an elongated vibrating member (31-34) extending along the axis of rotation (29) and having the vibrating unit (23) at the driving end (31), the tool head (22) at the driven end (32) and an intermediate portion (33, 34) between the two ends,
the intermediate region (33, 34) being mechanically fixedly connected to the machine connection (21),
the connection of the intermediate portion and the machine connection comprising a tubular structure (35),
(i) which surrounds the driving end (31),
(ii) one end of which is fixed to the intermediate portion (33, 34), and
(iii) the other end of which is connected to the machine connection (21).

2. The tool according to claim 1, **characterized in that** the energy receiving means (24) comprises a coil which is adapted to be penetrated by a magnetic field and is directly or indirectly connected to one or more vibratory drives (23) in the vibration unit.

3. The tool according to claim 2, **characterized in that** the coil is annular and concentric to the axis of rotation (29) and is designed to cooperate with a stationary coil facing it in the direction of the axis of rotation.

4. The tool according to any one of the preceding claims, the feed direction (26) of which is perpendicular to the axis of rotation (29).

5. The tool according to any one of the preceding claims, wherein the part of the tool head engaged with the workpiece has a diameter of more than 25 mm and/or a diameter of less than 150 mm, preferably less than 100 mm, particularly preferably less than 80 mm.

6. The tool according to one or more of the preceding claims, wherein the vibration unit (23) comprises one or more piezo elements (41).

7. The tool according to claim 1, wherein the drive end comprises one or more translationally vibrating vibratory drives (41, 42) mounted eccentrically with respect to the axis of rotation, the axis of vibration of which is directed in the circumferential direction with respect to the axis of rotation (29).

8. The tool according to claim 6 and 7, wherein one end of a piezo element (41) is connected to an abutment surface at the driving end (31) and the other end is free or connected to a counter mass element (42).

9. The tool according to one of the preceding claims, **characterized in that** it comprises one or more separately attachable cutting inserts (25) at the tool head (22).

10. The tool according to one of the preceding claims, **characterized in that** the machine connection (21) has a standardized connection piece, in particular a steep taper or an HSK connection.

11. Use of the tool according to claim 1, 7, 8, 9 or 10,
(i) at a vibration frequency which is a torsional resonance frequency of the vibrating part (31 - 34) or a multiple thereof,
(ii) the input end and/ or the output end being located within a range of ±20%, preferably ±10%, more preferably ±5% of the resonance wavelength around a vibration antinode (42).

12. The use according to claim 11 or use of a tool according to any of claims 1, 7, 8, 9 or 10,
(i) at a vibration frequency which is a torsional resonance frequency of the vibrating member or a multiple thereof,
(ii) the intermediate region and in particular its attachment region towards the joint being located within a range of ±20%, preferably ±10%, particularly preferably ±5% of the resonance wavelength around a vibration node (41, 43).

13. The use according to claim 11 or 12, wherein the vibration amplitude in the circumferential direction at the outer circumference of the tool is above 0.5 µm, preferably above 1 µm, more preferably above 2 µm.

14. The use according to any one of claims 11 to 13, wherein the vibration frequency is above 5 kHz, preferably above 10 kHz, more preferably above 15 kHz or below 100 kHz or below 80 kHz or below 60 kHz.

15. The use according to any one of claims 11 to 14, **characterized in that** the rotational speed of the tool is above 500 rpm, more preferably above 1000 rpm, more preferably above 2000 rpm or below 30000 rpm, preferably below 24000 rpm, more preferably below 20000 rpm.

16. A machine tool (1) comprising a machine frame (10), a workpiece table (11) mounted thereon for holding a workpiece (2), a tool spindle (12) mounted on the machine frame, a tool (20) according to one or more of claims 1 to 10, an energy transmitting device (17) for wireless transmission of energy to the energy receiving device (24) of the tool, and a controller (16) designed for operating the machine equipped with the tool, in particular the spindle and the energy transmitting device.

## Revendications

1. Outil (20) comportant
un raccord de machine (21) côté machine pour relier l'outil à une machine-outil (1) pour l'entraînement en rotation (27) de l'outil autour d'un axe de rotation (29) et l'avancement (26) de l'outil par rapport à une pièce à usiner,
une tête d'outil (22) côté pièce à usiner avec une ou plusieurs arêtes de coupe pour l'usinage d'une pièce à usiner, le diamètre de la tête d'outil étant supérieur à 20 mm et les arêtes de coupe de l'outil étant disposées de telle sorte qu'elles puissent balayer une surface perpendiculaire à l'axe de rotation,
une unité de vibration (23) prévue pour faire vibrer la tête de l'outil en rotation (28) autour de l'axe de rotation, et
un dispositif de réception d'énergie (24) destiné à recevoir de l'énergie fournie sans fil et à fournir de l'énergie électrique à l'unité de vibration,
**caractérisé en ce que**
l'outil comprend un élément vibrant (31 - 34) allongé et s'étendant le long de l'axe de rotation (29), qui présente, à l'extrémité d'entraînement (31), l'unité vibrante (23), à l'extrémité entraînée (32), la tête d'outil (22) et, entre les deux extrémités, une zone intermédiaire (33, 34),
la zone intermédiaire (33, 34) étant solidaire mécaniquement du raccord de machine (21),
la liaison entre la zone intermédiaire et le raccord de machine présentant une structure tubulaire (35),
(i) qui entoure l'extrémité d'entraînement (31),
(ii) dont une extrémité est fixée à la partie intermédiaire (33, 34), et
(iii) dont l'autre extrémité est reliée au raccord de machine (21).

2. Outil selon la revendication 1, **caractérisé en ce que** le dispositif de réception d'énergie (24) comprend une bobine apte à être traversée par un champ magnétique, qui est reliée directement ou indirectement à un ou plusieurs actionneurs vibratoires (23) dans l'unité de vibration.

3. Outil selon la revendication 2, **caractérisé en ce que** la bobine est annulaire et concentrique à l'axe de rotation (29) et est conçue pour coopérer avec une bobine stationnaire située en face d'elle dans la direction de l'axe de rotation.

4. Outil selon l'une quelconque des revendications précédentes, dont la direction d'avancement (26) est perpendiculaire à l'axe de rotation (29).

5. Outil selon l'une quelconque des revendications précédentes, dans lequel la partie de la tête d'outil en contact avec la pièce à usiner présente un diamètre supérieur à 25 mm et/ou un diamètre inférieur à 150 mm, de préférence inférieur à 100 mm, plus préférentiellement inférieur à 80 mm.

6. Outil selon l'une ou plusieurs des revendications précédentes, dans lequel l'unité de vibration (23) comprend un ou plusieurs éléments piézoélectriques (41).

7. Outil selon la revendication 1, dans lequel l'extrémité d'entraînement comprend un ou plusieurs actionneurs vibrants (41, 42), vibrant en translation, excentrés par rapport à l'axe de rotation, dont l'axe de vibration est orienté dans la direction circonférentielle par rapport à l'axe de rotation (29).

8. Outil selon les revendications 6 et 7, dans lequel une extrémité d'un élément piézoélectrique (41) est reliée à une surface d'appui sur l'extrémité d'entraînement (31) et l'autre extrémité est libre ou reliée à un élément de contre-masse (42).

9. Outil selon l'une des revendications précédentes, **caractérisé en ce qu'**il comporte sur la tête d'outil (22) une ou plusieurs plaquettes de coupe (25) susceptibles d'être montées séparément.

10. Outil selon l'une des revendications précédentes, **caractérisé en ce que** le raccord de machine (21) présente une pièce de raccordement normalisée, en particulier un cône à forte inclinaison ou un raccord HSK.

11. Utilisation de l'outil selon la revendication 1, 7, 8, 9 ou 10, (i) à une fréquence de vibration qui est une fréquence de résonance de torsion de l'élément vibrant (31-34) ou un multiple de celle-ci, (ii) à laquelle l'extrémité d'entraînement et/ou l'extrémité entraînée se situe dans une plage de ±20%, de préférence ±10%, de manière particulièrement préférée ±5% de la longueur d'onde de résonance autour d'un ventre de vibration (42).

12. Utilisation selon la revendication 11 ou utilisation d'un outil selon l'une des revendications 1, 7, 8, 9 ou 10,
(i) à une fréquence de vibration qui est une fréquence de résonance en torsion de l'élément vibrant ou un multiple de celle-ci,
(ii) la zone intermédiaire, et en particulier sa zone de fixation vers la connexion, étant située dans une plage de ±20%, de préférence +10%, plus préférentiellement ±5% de la longueur d'onde de résonance autour d'un nœud de vibration (41, 43).

13. Utilisation selon la revendication 11 ou 12, dans laquelle l'amplitude de vibration dans la direction circonférentielle sur la périphérie extérieure de l'outil est supérieure à 0,5 µm, de préférence supérieure à 1 µm, de manière particulièrement préférée supérieure à 2 µm.

14. Utilisation selon l'une des revendications 11 à 13, dans laquelle la fréquence de vibration est supérieure à 5 kHz, de préférence supérieure à 10 kHz, de manière particulièrement préférée supérieure à 15 kHz ou inférieure à 100 kHz ou inférieure à 80 kHz ou inférieure à 60 kHz.

15. Utilisation selon l'une des revendications 11 à 14, **caractérisée en ce que** la vitesse de rotation de l'outil est supérieure à 500 tr/min, de préférence supérieure à 1000 tr/min, de préférence encore supérieure à 2000 tr/min ou inférieure à 30000 tr/min, de préférence inférieure à 24000 tr/min, de préférence encore inférieure à 20000 tr/min.

16. Machine-outil (1) comprenant un bâti de machine (10), une table porte-pièce (11) montée sur celui-ci pour supporter une pièce à usiner (2), une broche porte-outil (12) montée sur le bâti de machine, un outil (20) selon une ou plusieurs des revendications 1 à 10, un dispositif d'émission d'énergie (17) pour l'émission sans fil d'énergie vers le dispositif de réception d'énergie (24) de l'outil, et une commande (16) qui est conçue pour faire fonctionner la machine équipée de l'outil, en particulier la broche et le dispositif d'émission d'énergie.
